# EUROPEAN PATENT APPLICATION

(11) **EP 4 379 750 A1**
(43) Date of publication of application: **05.06.2024**
(21) Application number: 22848680.9
(22) Date of filing: 29.07.2022
(51) Int. Cl.: H01B 13/00

(54) **METHOD FOR MANUFACTURING WIRE HARNESS, AND WIRE HARNESS**

(30) Priority: 30.07.2021 CN 202110873846
(71) Applicant: Changchun Jetty Automotive Technology Co., Ltd., Changchun, Jilin 130000 (CN)
(72) Inventor: WANG, Chao, Changchun, Jilin 130000 (CN)
(74) Representative: Boult Wade Tennant LLP
(86) International application number: PCT/CN2022/108994
(87) International publication number: WO 2023/006076

(57) **Abstract**

A method for manufacturing a wire harness, and a wire harness. The method includes: Step S 110: printing an insulation carrier by a 3D printing process; Step S 120: laying at least one conductor on the insulation carrier; and Step S 130: printing an insulation layer on the insulation carrier by a 3D printing process, to make the conductor be enclosed between the insulation carrier and the insulation layer. The wire harness is manufactured by the method for manufacturing the wire harness. The present disclosure provides a method for manufacturing wire harness by means of 3D printing, in which a wire harness can be obtained by printing an insulation layer and laying a conductor alternatively. The manufacturing method is simple, and can realize automatic and large-batch rapid production with a high processing speed and a high precision, thereby greatly reducing the cost of the wire harness and improving the qualification rate of the wire harness.

## Description

### RELATED APPLICATION

The present disclosure claims priority to Chinese Invention Patent Application No. 202110873846.6 filed on July 30, 2021, the content of which is incorporated herein as a part of the present disclosure by reference.

### TECHNICAL FIELD

The present disclosure relates to the technical field of electrical connections, and particularly to a method for manufacturing a wire harness, and a wire harness.

### BACKGROUND

At present, the wire harness used for electrical connection is formed by processing and assembling parts such as an electrical wire, a terminal, a sheath, a positioning piece, a bracket, etc., and the electrical wire includes a conductive wire and an insulation layer. During assembly, the electrical wire should be cut into a specified length, two ends of the electrical wire are crimped to terminals, and a plurality of electrical wires are bundled together. It can be seen that the processing process of the wire harness is complex, low degree of automation, and low processing efficiency, resulting in a high production cost and a high defective rate of the wire harness.

In addition, electrical appliances at present are updated frequently and have various functions, and their corresponding wire harnesses are changed from the previous large-batch and standard production to a small-batch and flexible production, so that the previous wire harness production mode is no longer suitable for the diversified production of new wire harnesses. With the increasing complexity of electrical appliance structures, the requirements for the spatial layout of the wire harnesses are gradually increasing, and it has become a demand in the technical field of electrical connections to directly produce a spatial wire harness with a 3D structure.

Therefore, the wire harness production industry is in urgent need of a wire harness production mode which has a high degree of production automation, can carry out a flexible production, and can produce a spatial wire harness.

### SUMMARY

The present disclosure provides a method for manufacturing a wiring harness and a wiring harness, so as to solve the problems of low degree of production automation and high production cost of the existing wire harnesses.

Embodiments of a first aspect of the present disclosure provide a method for manufacturing a wire harness, including: Step S110: printing an insulation carrier by a 3D printing process; Step S120: laying at least one conductor on the insulation carrier; and Step S130: printing an insulation layer on the insulation carrier by a 3D printing process, to make the conductor be enclosed between the insulation carrier and the insulation layer.

In some embodiments, the method for manufacturing a wire harness is used to manufacture a wire harness having n layers of conductors, where n is a positive integer greater than 1; and the method further includes: Step S140 after Step S130: repeatedly performing Steps S120 to S130 for (n-1) times to obtain a wire harness having n layers of conductors. The insulation carrier in Step S120 that is repeatedly performed each time is the insulation layer printed in Step S130 that is performed most recently.

In some embodiments, in Step S120, laying at least one conductor on the insulation carrier includes: sequentially or synchronously laying a plurality of conductors on the insulation carrier in a preset arrangement.

In some embodiments, the preset arrangement includes at least one selected from a parallel interval arrangement and a cross arrangement.

In some embodiments, the method for manufacturing a wire harness further includes: Step S125: electrically connecting designated different conductors among the plurality of conductors in a same layer by means of crimping or welding.

In some embodiments, the method for manufacturing a wire harness further includes: Step S126 after Step S120: laying at least one hollow cooling pipe on the insulation carri er.

In some embodiments, the method for manufacturing a wire harness further includes: Step S150 after Step S140: electrically connecting predetermined different layers of conductors among the n layers of conductors by punching a hole in the insulation layer and pouring a conductive material into the hole.

In some embodiments, the step of laying the conductor in Step S120 is started before the step of printing the insulation carrier in Step S110 is completed; and the step of printing the insulation layer in Step S130 is started before the step of laying the conductor in Step S120 is completed.

In some embodiments, in Step S120, the conductor is pre-formed by a 3D printing process.

In some embodiments, the conductor is a conductive wire, and in Step S120, the conductive wire is laid on the insulation carrier by a wire feeder.

In some embodiments, the conductor is a conductive wire with a shielding layer.

In some embodiments, the method for manufacturing a wire harness further includes: Step S160 after Step S130: crimping or welding a connecting terminal to a tail end of the conductor, to allow electrical connection between different wire harnesses or between a wire harness and an electrical appliance by plugging connection between the connecting terminals thereof.

In some embodiments, the method for manufacturing a wire harness further includes: Step S170 after Step S160: printing a sheath at the tail end of the conductor by a 3D printing process, with the connecting terminal being accommodated in the sheath, to allow the plugging connection between the connecting terminals in the sheaths through plugging connection between the sheaths.

In some embodiments, the method for manufacturing a wire harness further includes: Step S180 after Step S126: printing a sealing connector at a tail end of the hollow cooling pipe by a 3D printing process, wherein the sealing connector is used to be connected to an air pump or a water pump to allow cooling gas or coolant to circulate in the hollow cooling pipe.

In some embodiments, the method for manufacturing a wire harness further includes: Step S190 after Step S130: printing a wire fastener on the outermost insulation carrier and/or the outermost insulation layer by a 3D printing process.

In some embodiments, the method for manufacturing a wire harness further includes: Step S200 after Step S130: printing a wire harness seal on the outermost insulation carrier and/or the outermost insulation layer by a 3D printing process.

Embodiments of a second aspect of the present disclosure provide a wire harness, which is manufactured by the method for manufacturing a wire harness according to the embodiments of the first aspect.

In some embodiments, a material of the conductor includes a metal material, which is one or more selected from the group consisting of nickel or alloy thereof, cadmium or alloy thereof, zirconium or alloy thereof, chromium or alloy thereof, cobalt or alloy thereof, manganese or alloy thereof, aluminum or alloy thereof, tin or alloy thereof, titanium or alloy thereof, zinc or alloy thereof, copper or alloy thereof, silver or alloy thereof, and gold or alloy thereof.

In some embodiments, a material of the conductor includes a nonmetallic material, which is one or more selected from the group consisting of conductive ceramic, carbon-containing conductor, solid electrolyte, mixed conductor and conductive polymer material.

In some embodiments, the carbon-containing conductor is one or more selected from the group consisting of graphite powder, carbon nanotube material and graphene material.

In some embodiments, the conductor has a cross-sectional area of 0.1 mm² to 260 mm².

In some embodiments, the insulation carrier and the insulation layer are both made of an insulation material, which includes one or more selected from the group consisting of polyvinyl chloride, polyurethane, nylon, polypropylene, silicone rubber, crosslinked polyolefin, synthetic rubber, polyurethane elastomer, crosslinked polyethylene and polyethylene.

In some embodiments, the insulation material has a breakdown strength of 0.3 KV/mm to 35 KV/mm.

In some embodiments, the insulation layer has a thickness of 0.03 mm to 5 mm.

The method for manufacturing a wire harness and the wire harness of the present disclosure have the following characteristics and advantages:
1. The present disclosure provides a method for manufacturing a wire harness by means of 3D printing, in which a wire harness can be obtained by printing insulation layers and laying conductors alternately. The manufacturing method is simple, and can realize automatic and large-batch rapid production with a high processing speed and a high precision, thereby greatly reducing the cost of the wire harness and improving the qualification rate of the wire harness.
2. According to the present disclosure, a wire harness having insulation layers and conductors alternately disposed may be obtained by alternately printing the insulation layers and laying the conductors layer by layer. The manufacturing method is simple, the manufacturing efficiency is high, and the manufacturing cost of the complex wire harness is reduced.
3. According to the present disclosure, different layers of conductors may be electrically connected, so that the design scheme of an electrical loop is optimized, and a wire harness with extremely complex conductive circuit can be manufactured.
4. According to the present disclosure, the steps of printing the insulation carrier, laying the conductor and printing the insulation layer may be synchronously performed in sequence, thereby further improving the production efficiency of the wire harness.
5. According to the present disclosure, a wire harness having a three-dimensional structure may be obtained by printing a curved insulation carrier and a curved insulation layer, without the need to manufacture a traditional wire harness and then bend it for shaping, so as to facilitate installation and reduce assembly hours.
6. According to the present disclosure, a hollow cooling pipe may be laid in the wire harness, and the hollow cooling pipe may be filled with circulating cooling gas or coolant, so that the heat emitted by the wire harness can be circularly cooled in time, which reduces the fusing risk of the wire harness, allows for reduction in the cross-sectional area of the conductor, saves materials and saves the cost of the wire harness.
7. According to the present disclosure, a conductor with a shielding layer may be adopted, so that a signal in the conductor can be shielded from electromagnetic interference at a position with strong electromagnetic interference, thereby ensuring the stability of the signal.
8. According to the present disclosure, a sheath may be directly printed to allow plugging connection between connecting terminals, which reduces the time for inserting the connecting terminal into the sheath, realizes automatic production, saves processing time and improves production efficiency.
9. According to the present disclosure, a fastener and a seal may be directly printed, which reduces the mounting procedures of the fastener and the seal, saves processing time and improves production efficiency.

### BRIEF DESCRIPTION OF DRAWINGS

The following drawings are only for schematic illustration and explanation of the present disclosure, rather than limiting the scope thereof. In the drawings:
FIG. 1 illustrates a flowchart of a method for manufacturing a wire harness according to a first embodiment of the present disclosure;
FIG. 2 illustrates a flowchart of a method for manufacturing a wire harness according to a second embodiment of the present disclosure;
FIG. 3 illustrates a flowchart of a method for manufacturing a wire harness according to a third embodiment of the present disclosure;
FIG. 4 illustrates a flowchart of a method for manufacturing a wire harness according to a fourth embodiment of the present disclosure;
FIG. 5 illustrates a flowchart of a method for manufacturing a wire harness according to a fifth embodiment of the present disclosure;
FIG. 6 illustrates a structural diagram of a wire harness according to a first embodiment of the present disclosure;
FIG. 7 illustrates a structural diagram of a wire harness according to a second embodiment of the present disclosure;
FIG. 8 illustrates a structural diagram of a wire harness according to a third embodiment of the present disclosure;
FIG. 9 illustrates a structural diagram of a wire harness according to a fourth embodiment of the present disclosure; and
FIG. 10 illustrates a structural diagram of a printing mechanism used in a method for manufacturing a wire harness of the present disclosure.

### DESCRIPTION OF EMBODIMENTS

For a clearer understanding of the technical features, objectives and effects of the present disclosure, specific embodiments of the present disclosure will now be described below with reference to the drawings. In the description of the present disclosure, unless otherwise specified, `a plurality of' means two or more. In the description of the present disclosure, unless otherwise specified, the term 'connection' should be understood in a broad sense, for example, it may be a fixed connection, a detachable connection, a direct connection, or an indirect connection through an intermediate medium. Those skilled in the art can understand the specific meanings of the above terms in this patent according to specific circumstances.

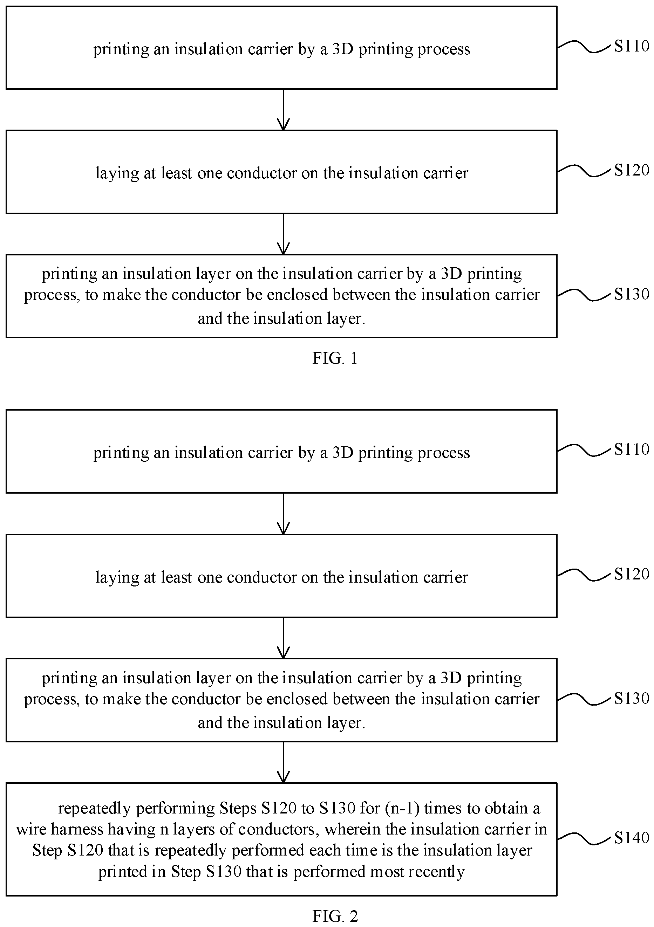

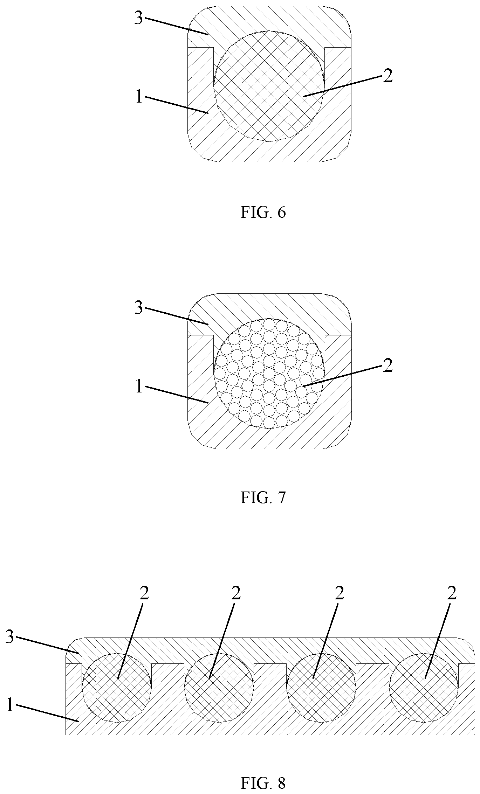

As illustrated in FIGS. 1 and 6, embodiments of a first aspect of the present disclosure provides a method for manufacturing a wire harness, and the method includes the following steps:
Step S110: printing an insulation carrier 1 by a 3D printing process;
Step S 120: laying at least one conductor 2 on the insulation carrier 1; and
Step S130: printing an insulation layer 3 on the insulation carrier 1 by a 3D printing process, to make the conductor 2 be enclosed between the insulation carrier 1 and the insulation layer 3, thereby obtaining a wire harness.

The present disclosure provides a method for manufacturing a wire harness by means of 3D printing, in which a wire harness can be obtained by printing insulation layers and laying conductors alternately. The manufacturing method is simple, and can realize automatic and large-batch rapid production with a high processing speed and a high precision, thereby greatly reducing the cost of the wire harness and improving the qualification rate of the wire harness.

In a first embodiment, as illustrated in FIG. 2, the method is used to manufacture a wire harness having n layers of conductors 2, where n is a positive integer greater than 1, and the method further includes:
Step S140 after step S130: repeatedly performing Steps S120 to S130 for (n-1) times to obtain a wire harness having n layers of conductors 2, thereby obtaining a complex wire harness.

In this embodiment, the insulation carrier 1 in Step S120 that is repeatedly performed each time is the insulation layer 3 printed in Step S130 that is performed most recently, so as to improve the manufacturing efficiency of the wire harness and reduce the cost.

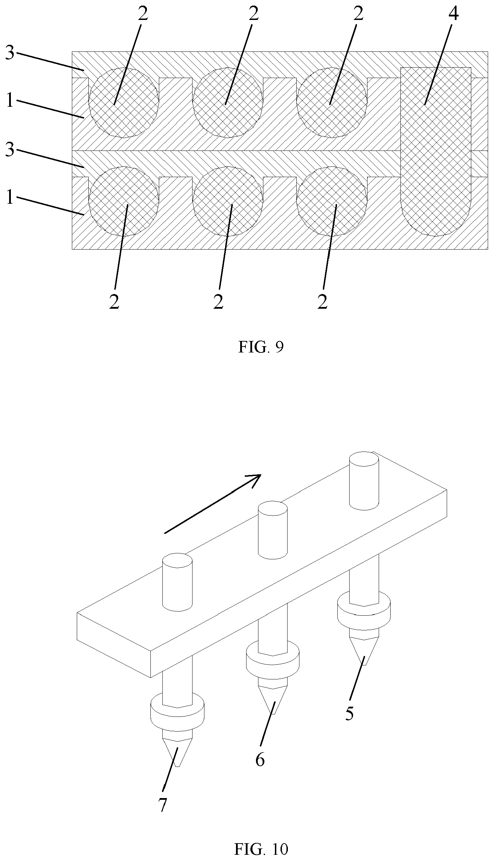

In a second embodiment, as illustrated in FIG. 9, the method is used to manufacture a wire harness having n layers of conductors 2, where n is a positive integer greater than 1, and the method further includes:
Step S140' after Step S130: repeatedly performing Steps S110 to S130 for (n-1) times to obtain a wire harness having n layers of conductors 2, thereby obtaining a complex wire harness.

In this embodiment, between two adjacent layers of conductors 2, there is one insulation layer 3 and one insulation carrier 1. The insulation layer 3 is used to cover a layer of conductor 2 below it. The insulation carrier 1 is used to support a layer of conductor 2 above it. A thickness of the insulation layer 3 may be less than that of the insulation carrier 1, and a groove for accommodating the conductor 2 is formed on an upper surface of the insulation carrier 1.

In an embodiment, as illustrated in FIG. 8, in Step S120, the laying at least one conductor 2 on the insulation carrier 1 includes: laying a plurality of conductors 2 on the insulation carrier 1 in a preset arrangement sequentially or synchronously, that is, each layer of conductor includes a plurality of conductors 2, so as to form a wire harness with a simple structure and a complex conductive circuit.

Further, the preset arrangement includes at least one selected from a parallel interval arrangement and a cross arrangement. For example, all of the plurality of conductors 2 are arranged in the parallel interval arrangement or in the cross arrangement. Alternatively, part of the plurality of conductors 2 are arranged in the parallel interval arrangement and other conductors 2 are arranged in the cross arrangement. When the parallel interval arrangement is adopted, the plurality of conductors 2 are insulated from each other. When the cross arrangement is adopted, the crossed conductors 2 are in contact with each other to form an electrical connection, thereby forming a branch point of a circuit.

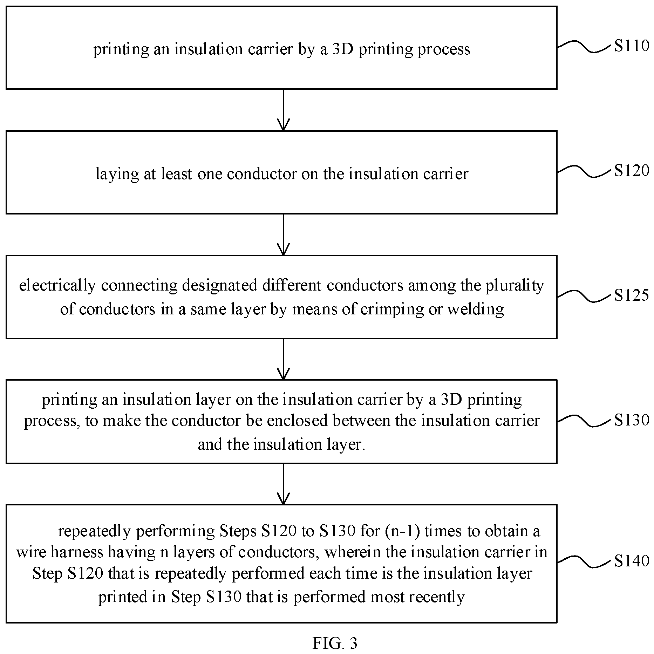

Further, as illustrated in FIG. 3, the method further includes:
Step S125: electrically connecting designated different conductors 2 among the plurality of conductors 2 in a same layer by means of crimping or welding, so as to achieve electrical connection between different conductors 2 in the same layer, thereby forming a conductive loop or a branch point of a circuit.

The crimping is a production process in which different conductors 2 are assembled and connected to each other, and then stamped into a whole by a crimping machine. The crimping is advantageous in mass production, and by using a connecting terminal and an automatic crimping machine, products with stable quality can be manufactured rapidly and in large quantities.

The welding includes one or more selected from friction welding, ultrasonic welding, arc welding, laser welding, and resistance welding.

The friction welding refers to a method of welding by using the heat generated by the friction between the contact surfaces of the workpieces as a heat source to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method using a laser beam with high energy density as a heat source.

The resistance welding refers to a method of welding by passing strong current through a contact point between an electrode and a workpiece to generate heat by a contact resistance.

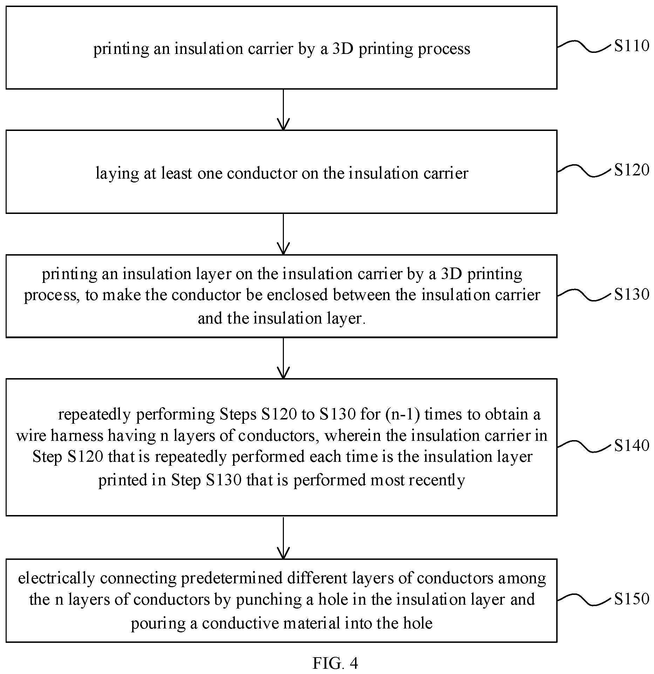

In an embodiment, as illustrated in FIGS. 4 and 9, the method further includes:
Step S150: electrically connecting predetermined different layers of conductors among the n layers of conductors by punching a hole in the insulation layer 3 and pouring a conductive material 4 into the hole, so as to achieve electrical connection between different layers of conductors.

In an embodiment, the step of laying the conductor 2 in Step S120 is started before the step of printing the insulation carrier 1 in Step S110 is completed,, and the step of printing the insulation layer 3 in Step S130 is started before the step of laying the conductor 2 in Step S120 is completed, that is, the step of printing the insulation carrier 1, the step of laying the conductor 2 and the step of printing the insulation layer 3 are synchronously performed in sequence, so as to further improve the production efficiency of the wire harness.

Further, the step of printing the insulation carrier 1 and the insulation layer 3 is completed by a printing mechanism, and the step of laying the conductor 2 is completed by a wire feeder. The printing mechanism and the wire feeder may be integrated into one set of mechanism, thereby synchronously printing the insulation carrier 1 and laying the conductor 2. The printing mechanism has a printing head with a nozzle. If the insulation carrier 1 with a large area or the insulation layer 3 with a large area needs to be printed, the nozzle may be set as a flat structure, that is, an outlet of the nozzle has a large width, so that the insulation carrier 1 with a large width or the insulation layer 3 with a large width can be printed at one time, thereby improving the printing efficiency.

Further, as illustrated in FIG. 10, an integrated mechanism integrating an insulation carrier printing head 5, a conductor laying mechanism 6 and an insulation layer printing head 7 is used to complete the steps of printing the insulation carrier 1, laying the conductor 2 and printing the insulation layer 3 at one time. The direction of an arrow in FIG. 10 indicates a moving direction of the integrated mechanism, and the integrated mechanism completes the above three steps in one stroke, thereby greatly improving the efficiency.

The printing head and the laying mechanism adopted by the present disclosure are of prior art, so the specific structures and working principles thereof will not be introduced herein.

In an embodiment, in Step S120, the conductor 2 is pre-formed by a 3D printing process. Since the conductor 2 is generally made of a metal material and has a high melting temperature, the insulation carrier 1 may be melt if the conductor 2 is directly printed on the insulation carrier 1.

However, the present disclosure is not limited thereto. In other embodiments, in Step S120, the conductor 2 may be printed on the insulation carrier 1 by a 3D printing process, and the conductor 2 in these embodiments is made of a conductive material with a low melting point, such as conductive plastic, conductive rubber and/or conductive ink.

In an embodiment, the conductor 2 is a conductive wire, and in Step S120, the conductive wire is laid on the insulation carrier 1 by a wire feeder, that is, the conductor laying mechanism 6 is a wire feeder.

The wire feeder may be provided with a plurality of wire feeding ports, so as to lay a plurality of conductors 2 simultaneously.

Further, the conductor 2 is a conductive wire with a shielding layer, so that a signal in the conductor 2 can be shielded from electromagnetic interference at a position with strong electromagnetic interference, thereby ensuring the stability of the signal.

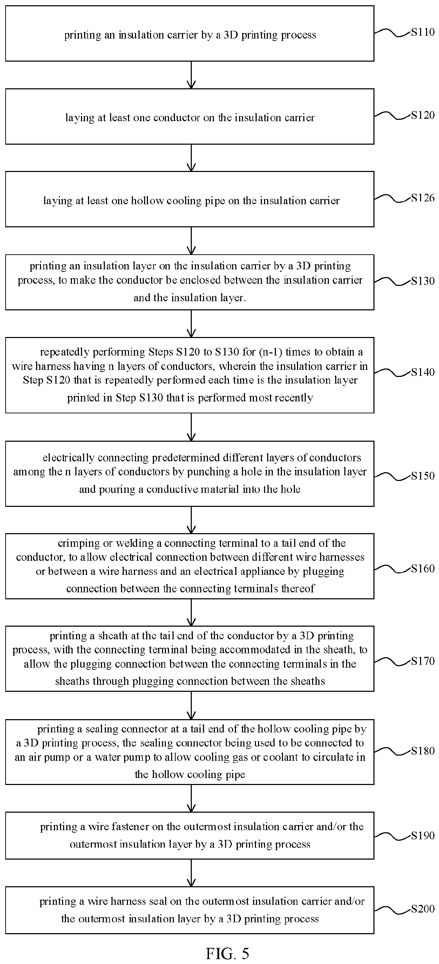

In an embodiment, as illustrated in FIG. 5, the method further includes:
Step S160 after Step S130: crimping or welding a connecting terminal to a tail end of the conductor 2, to allow electrical connection between different wire harnesses by plugging connection between the connecting terminals of different wire harnesses, or to allow electrical connection between a wire harness and an electrical appliance through the connection between the connecting terminal and the electrical appliance.

It should be noted that the orders of Step S 160 and Step S 150 are not limited in the present disclosure, and Step S 160 may be performed either after or before Step S 150.

Further, as illustrated in FIG. 5, the method further includes:
Step S 170 after Step S 160: printing a sheath at the tail end of the conductor 2 by a 3D printing process, with the connecting terminal being accommodated in the sheath, to allow the plugging connection between the connecting terminals in the sheaths through plugging connection between the sheaths.

It should be noted that the orders of Step S 170 and Step S 150 are not limited in the present disclosure, and Step S 170 may be performed either after or before Step S150, as long as Step S170 is performed after Step S160.

In an embodiment, as illustrated in FIG. 5, the method further includes:
Step S126 after Step S 120: laying at least one hollow cooling pipe on the insulation carrier 1, i.e., laying the hollow cooling pipe after laying the conductor 2 and before printing the insulation layer 2 on the conductor 2, such as laying the hollow cooling pipe adjacent to the conductor 2. During the use of the wire harness, the hollow cooling pipe may be filled with circulating cooling gas or coolant, so that the heat emitted by the wire harness can be circularly cooled in time, which reduces the fusing risk of the wire harness, allows for reduction in the cross-sectional area of the conductor, saves materials and saves the cost of the wire harness.

Further, as illustrated in FIG. 5, the method further includes:
Step S180 after Step S126: printing a sealing connector at a tail end of the hollow cooling pipe (i.e., an end extending out of the insulation layer 3) by a 3D printing process. The sealing connector is used to be connected to an air pump or a water pump, so that cooling gas or coolant can circulate in the hollow cooling pipe. In this embodiment, the sealing connector is directly printed, which reduces the mounting procedures of the sealing element, saves the processing time and improves the production efficiency.

It should be noted that the order of Step S 180 and Step S 150, the order of Step S180 and Step S 160, and the order of Step S 180 and Step S 170 are not limited in the present disclosure, as long as Step S 180 is performed after Step S126.

In an embodiment, as illustrated in FIG. 5, the method further includes:
Step S190 after Step S130: printing a wire fastener on the outermost insulation carrier 1 and/or the outermost insulation layer 3 by a 3D printing process, so that the wire harness can be fasten on a wire-harness mounting base such as vehicle sheet metal through the wire fastener. When n layers of wire harnesses are printed, Step S190 is performed after Step S 140. In this embodiment, the wire harness fastener is directly printed, which reduces the mounting procedures of the wire harness fastener, saves the processing time and improves the production efficiency.

It should be noted that the order of Step S190 and Step S 150, the order of Step S190 and Step S 160, the order of Step S 190 and Step S 170, and the order of Step S 190 and Step S 180 are not limited in the present disclosure, as long as Step S 190 is performed after all of the insulation layers 3 are printed.

In an embodiment, as illustrated in FIG. 5, the method further includes:
Step S200 after Step S 130: printing a wire harness seal on the outermost insulation carrier 1 and/or the outermost insulation layer 3 by a 3D printing process to seal the wire harness. In this embodiment, the wire harness seal is directly printed, which reduces the mounting procedures of the wire harness seal, saves the processing time and improves the production efficiency.

It should be noted that the order of Step S200 and Step S 150, the order of Step S200 and Step S 160, the order of Step S200 and Step S 170, the order of Step S200 and Step S180, and the order of Step S200 and Step S 190 are not limited in the present disclosure, as long as Step S200 is performed after all of the insulation layers 3 are printed.

Embodiments of a second aspect of the present disclosure provide a wire harness, which is manufactured by the method for manufacturing a wire harness according to the embodiments of the first aspect. The advantageous effects of the wire harness according to the embodiments of the second aspect are the same as those of the method according to the embodiments of the first aspect, and will not be repeated herein.

In an embodiment, the conductor 2 of the wire harness is provided with a connecting end located outside the insulation layer 3 and the insulation carrier, and the connecting ends of different layers of conductors may be crimped or welded to each other to form a connection point, or may be connected to any other electrical circuit through a terminal such as a golden finger, a pin terminal, a welding electrical wire, etc.

The crimping is a production process in which the conductor 2 and the connecting end are assembled and connected to each other, and then stamped into a whole by a crimping machine. The crimping is advantageous in mass production, and by using a connecting terminal and an automatic crimping machine, products with stable quality can be manufactured rapidly and in large quantities.

The welding includes one or more selected from friction welding, ultrasonic welding, arc welding, laser welding, and resistance welding.

The friction welding refers to a method of welding by using the heat generated by the friction between the contact surfaces of the workpieces as a heat source to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method using a laser beam with high energy density as a heat source.

The resistance welding refers to a method of welding by passing strong current through a contact point between an electrode and a workpiece to generate heat by a contact resistance.

In an embodiment, the conductor 2 may be a single-core structure (as illustrated in FIG. 6) or a multi-core soft structure (as illustrated in FIG. 7).

In an embodiment, the material of the conductor 2 includes a metal material, which is one or more one or more selected from the group consisting of nickel or alloy thereof, cadmium or alloy thereof, zirconium or alloy thereof, chromium or alloy thereof, cobalt or alloy thereof, manganese or alloy thereof, aluminum or alloy thereof, tin or alloy thereof, titanium or alloy thereof, zinc or alloy thereof, copper or alloy thereof, silver or alloy thereof, and gold or alloy thereof. The most commonly used metal material for the conductor is copper or copper alloy, because the conductivity of copper is good among metals, and copper is not a precious metal while being convenient for processing and good in ductility. However, with the increasing price of copper, the material cost of the conductor made of copper is higher and higher. To this end, people begin to look for alternatives to copper to reduce the cost. The content of metallic aluminum in the earth's crust is about 7.73%, and the price of aluminum is relatively low due to the optimization of its refining technology. In addition, compared with copper, aluminum is lighter, and its conductivity is second only to copper, so that aluminum or aluminum alloy can partially replace copper or copper alloy in the field of electrical connection.

In an embodiment, the material of the conductor 2 includes a nonmetallic material, which is one or more selected from the group consisting of conductive ceramic, carbon-containing conductor, solid electrolyte, mixed conductor and conductive polymer material.

Exemplarily, the carbon-containing conductor is made of one or more selected from the group consisting of graphite powder, carbon nanotube material and graphene material. In an embodiment, in a case where the conductor 2 is laid in a non-fixed shape, has a high degree of flexibility, and has a complex structure, different laying and wire feeding methods cannot meet the requirements, so that the conductor 2 may be 3D-printed. In this case, materials such as conductive plastics, conductive rubber and/or conductive ink may be used, these materials generally include conductive filler, adhesive, solvent and additive. The conductive filler includes metallic and nonmetallic powders. Exemplarily, the nonmetallic powder includes one or more selected from the group consisting of conductive ceramic, carbon-containing conductor, solid electrolyte, mixed conductor and conductive polymer material. The carbon-containing conductor includes one or more selected from the group consisting of graphite powder, carbon nanotube material and graphene material, which enables the formed conductor 2 to have good conductivity, while being simple and convenient to manufacture with little pollution. Exemplarily, the metallic powder may be one or more selected from the group consisting of nickel or alloy thereof, cadmium or alloy thereof, zirconium or alloy thereof, chromium or alloy thereof, cobalt or alloy thereof, manganese or alloy thereof, aluminum or alloy thereof, tin or alloy thereof, titanium or alloy thereof, zinc or alloy thereof, copper or alloy thereof, silver or alloy thereof, and gold or alloy thereof. The adhesive includes at least one selected from the group consisting of epoxy resin, polyester resin, acrylic resin, polyamide resin, modified phenolic resin and cellulose resin.

The conductor 2 has a cross-sectional area of 0.1 mm² to 260 mm². In the wire harness, the cross-sectional area of the conductor 2 determines the current that the conductor 2 can conduct. In general, the conductor 2 for signal conduction is able to conduct a small current and has a small cross-sectional area. For example, a conductor 2 of a signal wire in an automotive wire harness may have a minimum cross-sectional area of 0.1 mm². However, a conductor 2 for power conduction is able to conduct a large current and has a large cross-sectional area. For example, a conductor 2 of a wire harness of an automobile battery may have a maximum cross-sectional area of 260 mm². When having a small cross-sectional area, the conductor 2 may be laid by a wire feeder. When having a large cross-sectional area, the conductor 2 may be 3D-printed, or the formed conductor 2 may be directly laid.

In an embodiment, the insulation carrier 1 and the insulation layer 3 are both made of an insulation material, which includes one or more selected from the group consisting of polyvinyl chloride, polyurethane, nylon, polypropylene, silicone rubber, crosslinked polyolefin, synthetic rubber, polyurethane elastomer, crosslinked polyethylene and polyethylene.

The insulation material has a breakdown strength of 0.3 KV/mm to 35 KV/mm. The breakdown strength is also called a dielectric breakdown strength, which means a highest electric-field strength that a material can withstand without being damaged (broken down) in an electric field. When the breakdown strength of the insulation layer is lower than 0.3 KV/mm, some thin insulation layers may be broken down under a normal voltage, resulting in invalid insulation. When the breakdown strength of the insulation layer is higher than 35 KV/mm, the choice of a material with too high breakdown strength will increase the cost of an integrated wire harness assembly and cause design waste, because the general vehicle environment does not have high voltage greater than 35 KV

The insulation layer 3 has a thickness of 0.03 mm to 5 mm. If the thickness of the insulation layer 3 is less than 0.03 mm, it not only cannot ensure that the breakdown voltage of the insulation layer is higher than the working voltage, but also cannot guarantee the wear resistance of the insulation layer, which causes the insulation layer to be damaged after being scraped and abraded for many times with the conductor 2 being exposed, which will lead to a current leakage or a short circuit, resulting in a wire damage and a functional failure. When the thickness of the insulation layer 3 is 5 mm, the breakdown voltage, the insulation resistance and the wear resistance of the insulation layer can meet the requirements. However, if the thickness is greater than 5 mm, the insulation layer will have defects such as air holes and collapse generated in the processing process due to the large thickness of the insulation layer, which degrades the performance of the insulation layer and wastes the material thereof, and increases the processing procedures and time. Therefore, the inventor chooses the thickness of the insulation layer as 0.03 mm to 5 mm.

Compared with the prior art, the method for manufacturing a wire harness and the wire harness of the present disclosure have at least the following advantages:
1. By printing the wire harness using 3D printing technology, it is possible to manufacture a wire harness with a complex spatial structure and form a wire harness in one go, thereby saving working hours. Compared with the traditional wire harness processing method, the present disclosure is more convenient and quicker with a high degree of flexible production, thereby being suitable for flexible production of various models and few batches, and suitable for fabrication of experimental samples.
2. The wire harness with a three-dimensional spatial structure can be formed using 3D printing technology, thereby being adapted to the assembly of wire harness in different environments.
3. By adopting the wire feeder, the conductor can be laid according to a programmed shape, and the conductor may be selected from a single-core hard structure and a multi-core soft structure depending on the wire diameter. The laying is fast in speed and highly adaptable.
4. By integrating the printing mechanism and the wire feeder, it is possible to synchronously print the insulation carrier, lay the conductor and print the insulation layer, thereby reducing the processing time. It is also possible to simultaneously manufacture a plurality of conductive loops by disposing a plurality of 3D printing heads and a plurality of wire feeding ports of the wire feeder to greatly improve the manufacturing efficiency.

Those described above are merely illustrative specific embodiments of the present disclosure, rather than limiting the scope of the present disclosure. Any equivalent change or modification made by those skilled in the art without departing from the concept and principle of the present disclosure should fall within the protection scope of the present disclosure. In addition, it should be noted that each constituent part of the present disclosure is not limited to the above overall application, and each technical feature described in the specification of the present disclosure can be used alone or in combination according to actual needs. Therefore, the present disclosure naturally covers other combinations and specific applications related to the inventive points of this case.

## Claims

1. A method for manufacturing a wire harness, comprising:
Step S110: printing an insulation carrier by a 3D printing process;
Step S120: laying at least one conductor on the insulation carrier; and
Step S130: printing an insulation layer on the insulation carrier by a 3D printing process, to make the conductor be enclosed between the insulation carrier and the insulation layer.

2. The method for manufacturing a wire harness according to claim 1, wherein the method is used to manufacture a wire harness having n layers of conductors, where n is a positive integer greater than 1; and the method further includes:
Step S140 after Step S130: repeatedly performing Steps S120 to S 130 for (n-1) times to obtain a wire harness having n layers of conductors;
wherein,
the insulation carrier in Step S120 that is repeatedly performed each time is the insulation layer printed in Step S130 that is performed most recently.

3. The method for manufacturing a wire harness according to claim 1 or 2, wherein in Step S120, laying at least one conductor on the insulation carrier comprises: sequentially or synchronously laying a plurality of conductors on the insulation carrier in a preset arrangement.

4. The method for manufacturing a wire harness according to claim 3, wherein the preset arrangement comprises at least one selected from a parallel interval arrangement and a cross arrangement.

5. The method for manufacturing a wire harness according to claim 3, further comprising:
Step S125: electrically connecting designated different conductors among the plurality of conductors in a same layer by means of crimping or welding.

6. The method for manufacturing a wire harness according to claim 1 or 2, further comprising:
Step S126 after Step S120: laying at least one hollow cooling pipe on the insulation carrier.

7. The method for manufacturing a wire harness according to claim 2, further comprising:
Step S150 after Step S140: electrically connecting predetermined different layers of conductors among the n layers of conductors by punching a hole in the insulation layer and pouring a conductive material into the hole.

8. The method for manufacturing a wire harness according to claim 1 or 2, wherein the step of laying the conductor in Step S120 is started before the step of printing the insulation carrier in Step S110 is completed; and
the step of printing the insulation layer in Step S130 is started before the step of laying the conductor in Step S120 is completed.

9. The method for manufacturing a wire harness according to claim 1 or 2, wherein in Step S120, the conductor is pre-formed by a 3D printing process.

10. The method for manufacturing a wire harness according to claim 1 or 2, wherein the conductor is a conductive wire; and
in Step S120, the conductive wire is laid on the insulation carrier by a wire feeder.

11. The method for manufacturing a wire harness according to claim 10, wherein the conductor is a conductive wire with a shielding layer.

12. The method for manufacturing a wire harness according to claim 1 or 2, further comprising:
Step S160 after Step S130: crimping or welding a connecting terminal to a tail end of the conductor, to allow electrical connection between different wire harnesses or between a wire harness and an electrical appliance by plugging connection between the connecting terminals thereof.

13. The method for manufacturing a wire harness according to claim 12, further comprising:
Step S170 after Step S160: printing a sheath at the tail end of the conductor by a 3D printing process, with the connecting terminal being accommodated in the sheath, to allow the plugging connection between the connecting terminals in the sheaths through plugging connection between the sheaths.

14. The method for manufacturing a wire harness according to claim 6, further comprising:
Step S180 after Step S126: printing a sealing connector at a tail end of the hollow cooling pipe by a 3D printing process, wherein the sealing connector is used to be connected to an air pump or a water pump to allow cooling gas or coolant to circulate in the hollow cooling pipe.

15. The method for manufacturing a wire harness according to claim 1 or 2, further comprising:
Step S190 after Step S130: printing a wire fastener on the outermost insulation carrier and/or the outermost insulation layer by a 3D printing process.

16. The method for manufacturing a wire harness according to claim 1 or 2, further comprising:
Step S200 after Step S 130: printing a wire harness seal on the outermost insulation carrier and/or the outermost insulation layer by a 3D printing process.

17. A wire harness, which is manufactured by the method for manufacturing a wire harness according to any one of claims 1 to 16.

18. The wire harness according to claim 17, wherein a material of the conductor comprises a metal material, which is one or more selected from the group consisting of nickel or alloy thereof, cadmium or alloy thereof, zirconium or alloy thereof, chromium or alloy thereof, cobalt or alloy thereof, manganese or alloy thereof, aluminum or alloy thereof, tin or alloy thereof, titanium or alloy thereof, zinc or alloy thereof, copper or alloy thereof, silver or alloy thereof, and gold or alloy thereof.

19. The wire harness according to claim 17, wherein a material of the conductor comprises a nonmetallic material, which is one or more selected from the group consisting of conductive ceramic, carbon-containing conductor, solid electrolyte, mixed conductor and conductive polymer material.

20. The wire harness according to claim 19, wherein the carbon-containing conductor is one or more selected from the group consisting of graphite powder, carbon nanotube material and graphene material.

21. The wire harness according to claim 17, wherein the conductor has a cross-sectional area of 0. 1 mm² to 260 mm².

22. The wire harness according to claim 17, wherein the insulation carrier and the insulation layer are both made of an insulation material, which comprises one or more selected from the group consisting of polyvinyl chloride, polyurethane, nylon, polypropylene, silicone rubber, crosslinked polyolefin, synthetic rubber, polyurethane elastomer, crosslinked polyethylene and polyethylene.

23. The wire harness according to claim 22, wherein the insulation material has a breakdown strength of 0.3 KV/mm to 35 KV/mm.

24. The wire harness according to claim 17, wherein the insulation layer has a thickness of 0.03 mm to 5 mm.
